# EUROPÄISCHE PATENTSCHRIFT

(11) **EP 3 370 989 B1**
(45) Veröffentlichungstag und Bekanntmachung des Hinweises auf die Patenterteilung: **29.01.2020**
(21) Anmeldenummer: 16775219.5
(22) Anmeldetag: 29.09.2016
(51) Int. Cl.: B60K 15/03

(54) **BEHÄLTER MIT VERSTEIFUNGSEINRICHTUNG**
CONTAINER HAVING A STIFFENING DEVICE
RÉSERVOIR MUNI D'UN DISPOSITIF DE RENFORCEMENT

(30) Priorität: 02.11.2015 DE 102015221378
(43) Veröffentlichungstag der Anmeldung: 12.09.2018
(73) Patentinhaber: TI Automotive Technology Center GmbH, 76437 Rastatt (DE)
(72) Erfinder: EHLER, Alex, 76437 Rastatt (DE); BOECKER, Albert J., 76275 Ettlingen (DE); GMÜND, Patrick, 76149 Karlsruhe (DE); GRAUER, Peter, 76872 Steinweiler (DE); MICHAELIS, Gerrit, 76448 Durmersheim (DE); OLBRICH, Matthias B., 76437 Rastatt (DE); CHEHADE, Ahmad, 76316 Malsch (DE); HAOUALA, Moez, 76185 Karlsruhe (DE)
(74) Vertreter: Gauss, Nikolai
(86) Internationale Anmeldenummer: PCT/EP2016/073203
(87) Internationale Veröffentlichungsnummer: WO 2017/076558

(56) Entgegenhaltungen:
- EP-A1- 0 816 151
- DE-A1-102011 015 049
- DE-A1-102013 017 000
- US-A1- 2009 206 097

## Beschreibung

Die Erfindung betrifft einen Behälter, insbesondere einen Kunststoff-Kraftstoffbehälter, mit einer das Innere des Behälters zwischen einander gegenüberliegenden ersten und zweiten Wandpartien des Behälters durchsetzenden und die Wandpartien aneinander koppelnden Versteifungseinrichtung, wodurch der Behälter beschädigungsfrei einem erhöhten Innendruck ausgesetzt werden kann, sowie ein Verfahren zur Aussteifung des Behälters.

Bei Kunststoff-Kraftstoffbehältern besteht zunehmend das Bedürfnis, die mit erhöhtem Innendruck verwenden zu können. Ein Grund hierfür besteht im Betrieb von sogenannten Hybridfahrzeugen, die sowohl über einen Verbrennungsmotor als auch einen zumindest zeitweise auch allein einsetzbaren Elektroantrieb verfügen. Im Kraftstoffbehälter entstehende Kraftstoffdämpfe werden beim Betrieb des Verbrennungsmotors einem Aktivkohlefilter zugeführt und von dort gelegentlich dem Motor, so dass im Kraftstoffbehälter kein Überdruck entsteht. Da dies im rein elektrischen Betrieb nicht stattfindet und die Kraftstoffdämpfe nicht einfach an die Umgebung abgegeben werden dürfen, besteht eine Lösung dieses Problems darin, die Kraftstoffdämpfe im Kraftstoffbehälter zurückzuhalten und dort einen erhöhten Innendruck zuzulassen. Hierfür muss der Kraftstoffbehälter entsprechend druckfest ausgelegt werden. Um Gewicht und Materialkosten zu sparen, möchte man eine Erhöhung der Wandstärke vermeiden. Eine innen oder außen auf den Behälter wirkende Versteifungseinrichtung wird daher bevorzugt. Ein gattungsgemäßer Behälter ist aus der US 2009/0206097 A1 bekannt. Die Versteifungseinrichtung besteht dort aus zwei miteinander koppelbaren Teilen, die jeweils durch eine Öffnung in zwei einander gegenüberliegenden Wandpartien des Behälters hindurchtreten und die Öffnungen im montierten Zustand der Versteifungseinrichtung deckelartig verschliessen. Als nachteilig wird daran empfunden, dass zwei Öffnungen in dem Behälter vorgesehen werden müssen, was den Abdichtungsaufwand verdoppelt und eine strukturelle Schwächung der Behälterwandung darstellt.

Der Erfindung liegt daher die Aufgabe zugrunde, einen Behälter mit einer wirksamen und kostengünstigen Aussteifung zu schaffen.

Zur Lösung dieser Aufgabe werden die in den Patentansprüchen 1 und 14 angegebenen Merkmalskombinationen vorgeschlagen. Vorteilhafte Ausgestaltungen und Weiterbildungen der Erfindung ergeben sich aus den abhängigen Ansprüchen.

Die Erfindung geht vor allem von dem Gedanken aus, dass in einem Kraftstoffbehälter regelmäßig bereits mindestens ein Einbaukörper vorgesehen ist, insbesondere ein sogenanntes Tankmodul, das etwa topfartig ausgebildet ist und ein Reservoir für Kraftstoff bildet und eine Kraftstoffpumpe aufnimmt. Dieser Einbaukörper kann als ein Element der Versteifungseinrichtung genutzt werden. Gemäß der Erfindung ist entsprechend vorgesehen, dass die Versteifungseinrichtung ein erstes, an der ersten Wandpartie angeordnetes Versteifungselement und ein zweites, an der zweiten Wandpartie angeordnetes Versteifungselement aufweist, wobei das erste und das zweite Versteifungselement zusammenwirkende Koppelpartien aufweisen, wobei das zweite Versteifungselement mit dem ersten Versteifungselement zugfest verbindbar ist und im verbundenen Zustand mit einem Flanschdeckel eine Öffnung in der zweiten Wandpartie verschließt und wobei das erste Versteifungselement über einen zwischengeordneten Ringkörper an einer Hinterschnittpartie der ersten Wandpartie fixiert ist. Die Öffnung in der zweiten Wandpartie ist regelmäßig als Montage- oder Zugangsöffnung zu dem Einbaukörper bereits vorgesehen.

Da eine fluiddichte Abdichtung durch den Flanschdeckel alleine nur schwer erzielt werden kann, ist die Öffnung in der zweiten Wandpartie zweckmäßig von einem in die Wandpartie eingebetteten Einlegering, beispielsweise einem Kupplungsring nach SAE-Norm J2587, umschlossen, der eine über die Außenseite der Wandpartie überstehende Befestigungspartie aufweist. Weiter ist ein Verschlussring vorgesehen, der mit der Befestigungspartie des Einlegerings zusammenwirkt und den Flanschdeckel des zweiten Versteifungselements übergreift und gegen einen Außenrand der Öffnung in der zweiten Wandpartie drückt. Der Verschlussring weist über seinen Umfang verteilte Durchbrechungen auf, die hakenartige Vorsprünge des Einlegerings aufnehmen und durch Verdrehen des Verschlussrings miteinander lösbar verrasten. Zweckmäßig ist zwischen dem Flanschdeckel des zweiten Versteifungselements und der zweiten Wandpartie ein Dichtkörper, insbesondere ein Dichtring aus Elastomermaterial, angeordnet.

Das erste Versteifungselement ist vorzugsweise als topfartiger Einbaukörper, insbesondere als Tankmodul mit einem Kraftstoffreservoir und einer darin angeordneten Kraftstoffpumpe, ausgebildet.

Die Herstellung der Hinterschnittpartie in der ersten Wandpartie kann in einer Blasform durch von außen auf die erste Wandpartie wirkende, in der Blasform beweglich angeordnete Schieber erfolgen. Alternativ kann die Hinterschnittpartie in der ersten Wandpartie durch ein in eine Blasform eingelegtes Formteil hergestellt sein.

Die Hinterschnittpartie ist zweckmäßig im Wesentlichen kreisförmig ausgebildet und kann aus mindestens zwei, vorzugsweise drei separaten Abschnitten bestehen.

In bevorzugter Ausgestaltung der Erfindung weist der Ringkörper behälterwandseitige, nach außen weisende Halterippen auf, deren freie Enden vor dem Einrasten des Einbaukörpers in den Ringkörper auf einem Kreis liegen, dessen Durchmesser d kleiner ist als der Durchmesser D eines Kreises, der den freien Innendurchmesser der Hinterschnittpartie definiert. Weiterhin kann der Ringkörper eine zylindrische Wandpartie mit Durchbrechungen aufweisen, in die Rastvorsprünge an einer Außenwandpartie des Einbaukörpers einrastbar sind.

Zweckmäßig ist die die Rastvorsprünge aufweisende Außenwandpartie des Einbaukörpers im Wesentlichen zylindrisch ausgebildet, mit einem Durchmesser, der höchstens dem Durchmesser D des freien Innendurchmessers der Hinterschnittpartie abzüglich der Dicke der die Durchbrechungen aufweisenden Wandpartie des Ringkörpers beträgt. Wenn die vorgenannten Abmessungen genau aufeinander abgestimmt sind, ist eine spielfreie Fixierung des Einbauköpers an der ersten Wandpartie sichergestellt.

Das erfindungsgemäße Verfahren zum Aussteifen eines Behälters, insbesondere eines Kunststoff-Kraftstoffbehälters, um den Behälter beschädigungsfrei einem erhöhten Innendruck aussetzen zu können, wobei der Behälter einander gegenüberliegende erste und zweite Wandpartien aufweist, ist dadurch gekennzeichnet, dass
- ein erstes Versteifungselement einer Versteifungseinrichtung über einen zwischengeordneten Ringkörper (26) an einer Hinterschnittpartie der ersten Wandpartie fixiert wird,
- eine Koppelpartie eines zweiten Versteifungselements der Versteifungseinrichtung durch eine in der zweiten Wandpartie vorgesehene und mit der Hinterschnittpartie der ersten Wandpartie fluchtende Öffnung hindurch mit einer komplementären Koppelpartie des ersten Versteifungselements in Eingriff gebracht wird, wobei ein Flanschdeckel des zweiten Versteifungselements die Öffnung in der zweiten Wandpartie verschließt.

In bevorzugter Ausgestaltung des Verfahrens wird ein Verschlussring mit einer Befestigungspartie eines in die zweite Wandpartie eingebetteten und die Öffnung umschließenden Einlegerings verbunden, wodurch der Flanschdeckel des zweiten Versteifungselements gegen die zweite Wandpartie gedrückt wird und die Öffnung zusammen mit einem zwischen der zweiten Wandpartie und dem Flanschdeckel angeordneten Dichtkörper dichtend verschließt.

Bevorzugt wird die erste Wandpartie behälterinnenseitig mit einer Hinterschnittpartie versehen, die in einer Blasform in die erste Wandpartie alternativ durch Schieber der Blasform oder durch ein in die Blasform eingelegtes Formteil eingeformt werden kann.

Im Folgenden wird die Erfindung anhand eines in der Zeichnung in schematischer Weise dargestellten Ausführungsbeispiels näher erläutert. Es zeigen
- Fig. 1a: und b eine schematische Darstellung der Herstellung einer Hinterschnittpartie in einer ersten Wandpartie mittels Schiebern in einer Blasform;
- Fig. 2: eine perspektivische Ansicht eines Formteils zur Herstellung einer Hinterschnittpartie in einer Blasform, wobei das Formteil in die Blasform eingelegt wird und von außen auf die erste Wandpartie wirkt;
- Fig. 3: eine schematische Ansicht einer Hinterschnittpartie an der Innenseite einer ersten Wandpartie;
- Fig. 4: eine schematische Ansicht eines Einbaukörpers und eines Ringkörpers in einem vormontierten Zustand;
- Fig. 5: die Positionierung des Einbaukörpers und des Ringkörpers gemäß Fig. 4 in der Hinterschnittpartie vor der Endmontage;
- Fig. 6: die Endposition des Einbaukörpers und des Ringkörpers gemäß Fig. 4 nach der Montage in der Hinterschnittpartie;
- Fig. 7: eine im Deckelbereich vereinfacht dargestellte, zwischen der ersten und einer zweiten Wandpartie des Behälters angeordnete, erste und zweite Versteifungselemente aufweisende Versteifungseinrichtung, wobei das erste Versteifungselement durch den Einbaukörper gebildet ist; und
- Fig. 8: den Deckelbereich der Versteifungseinrichtung im Querschnitt; und
- Fig. 9: eine Draufsicht auf den Deckelbereich.

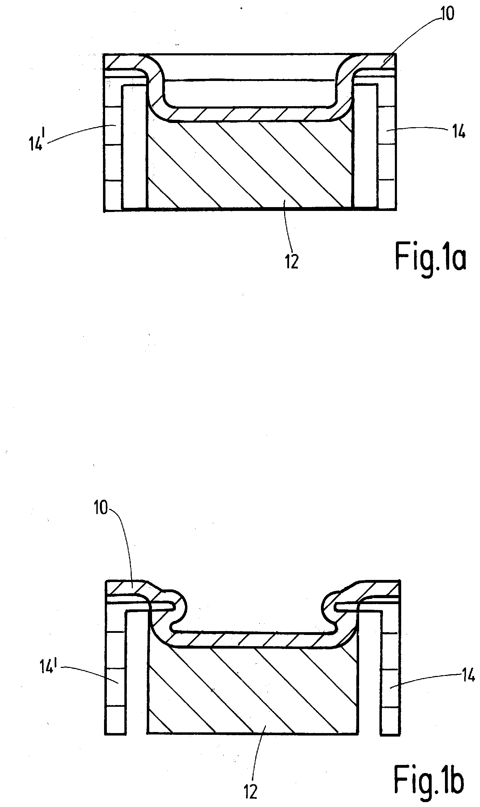

Fig. 1 zeigt vereinfacht dargestellt die Herstellung einer Hinterschnittpartie in einer ersten Wandpartie 10 eines im übrigen nicht näher dargestellten Kunststoffbehälters in einer Blasform 12. Die erste Wandpartie 10 wird in einem etwa kreisförmigen Bereich der Blasform 12 geformt (Fig. 1a), so dass seitlich angeordnete Schieber 14, 14' zueinander hin verfahren werden können (Fig. 1b) und dabei in einem gewissen Abstand vom Boden das fließfähig erwärmte Material der ersten Wandpartie 10 verformen und damit die Hinterschnittpartie bilden. Es können durchaus mehr als zwei Schieber verwendet werden, die in gleichen oder ungleichen Umfangsabständen auf einem Kreis angeordnet sind und die jeweils einen kreisabschnittsförmigen Bereich der Hinterschnittpartie formen.

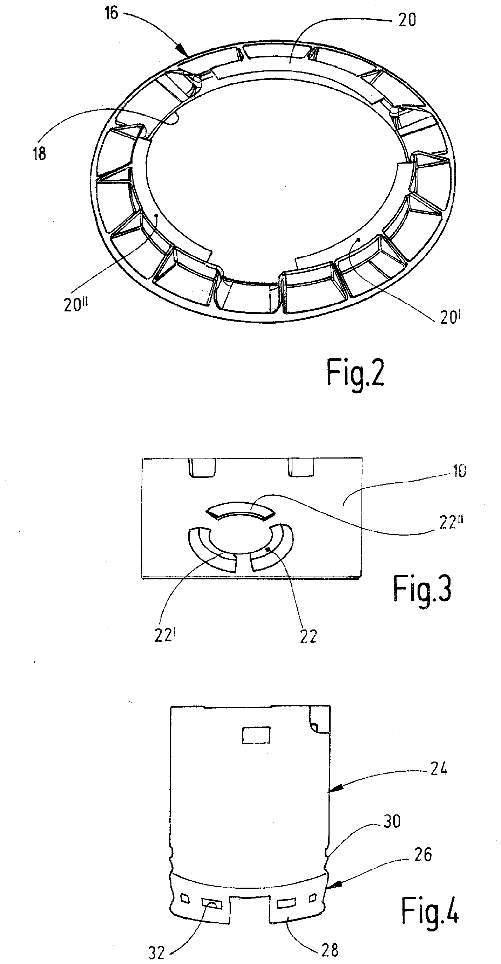

Alternativ kann das in Fig. 2 dargestellte Formteil 16 zur Herstellung der Hinterschnittpartie verwendet werden. Das Formteil ist ringförmig mit einer zentralen Durchbrechung 18, die den Durchmesser der Hinterschnittpartie definiert. Das Formteil 16 wird vor dem Beginn des Blasformvorgangs in die Blasform an der Stelle eingelegt, an der die Hinterschnittpartie geschaffen werden soll. Beim Formen der ersten Wandpartie befindet sich das Formteil 16 zwischen der Blasform und der Außenseite der ersten Wandpartie. Das Formteil 16 weist im Abstand von einer gedachten Basisebene drei nach innen weisende, teilkreisförmige Rippen 20, 20', 20" auf die von dem Material der ersten Wandpartie umflossen werden und auf der Innenseite der ersten Wandpartie drei entsprechende Hinterschnittabschnitte bilden (vgl. Fig. 3). Das Formteil ist nach dem Blasformen weitgehend in die erste Wandpartie eingeformt und verbleibt somit am Behälter; es handelt sich also um ein nicht wiederverwendbares Verlustteil.

Fig. 3 zeigt eine Ansicht der Innenseite der ersten Wandpartie des Behälters mit einer durch drei Hinterschnittabschnitte 22, 22', 22" gebildeten Hinterschnittpartie, die durch eine der zwei voranstehend beschriebenen Methoden gebildet sein kann.

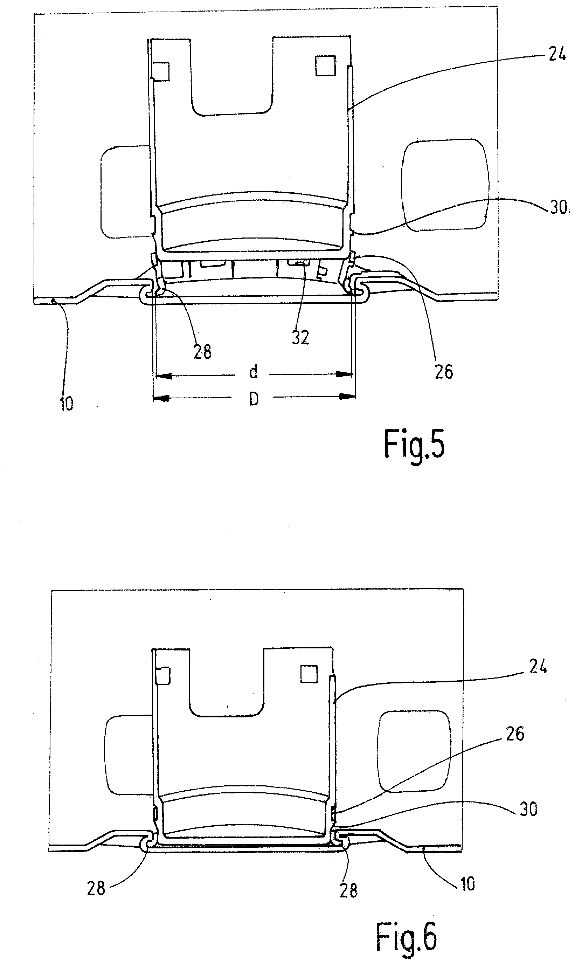

Fig. 4 zeigt einen als Tankmodul ausgebildeten Einbaukörper 24 und einen Ringkörper 26. Der Einbaukörper 24 und der Ringkörper 26 befinden sich in einem vormontierten oder teilmontierten Zustand, bei dem eine bodenseitige Partie des Einbaukörpers 24 teilweise in einen im Ringinneren gebildeten Raum eingesteckt ist und die zwei Teile zusammengehalten werden. Im Bereich seines freien oder bodenseitigen Endes weist der Ringkörper 26 eine Mehrzahl nach außen weisender, segmentierter Halterippen 28 auf, deren Umkreis wie ersichtlich einen Durchmesser d aufweist, der kleiner ist als der Durchmesser D eines Innenkreises der Hinterschnittabschnitte 22, 22', 22", d.h. der Bereich des Ringkörpers 26 mit den Halterippen 28 lässt sich bis zur ersten Wandpartie an den Hinterschnittabschnitten 22, 22', 22" vorbei in die Hinterschnittpartie einführen, wie in Fig. 5 dargestellt ist. Selbstverständlich lassen sich der Ringkörper 26 und der Einbaukörper 24 auch getrennt und in dieser Reihenfolge nacheinander in der Hinterschnittpartie montieren.

Fig. 5 zeigt die in die Hinterschnittpartie eingeführte Kombination aus Einbaukörper 26 und Ringkörper 26. Der Einbaukörper wird von dieser Zwischenstellung aus in Richtung der ersten Wandpartie 10 geschoben. Dabei wird der Bereich der Halterippen 28 des Ringkörpers 26 aufgespreizt und die Halterippen 28 treten in die Hinterschnitte ein. Gleichzeitig rasten Rastvorsprünge 30 an der Außenseite der bodenseitigen Partie des Einbaukörpers 24 in komplementäre Durchbrechungen 32 in der zylindrischen Wandung des Ringkörpers 26 ein, so dass der Ringkörper 26 in der Hinterschnittpartie und der Einbaukörper 24 in dem Ringkörper fixiert ist, wie Fig. 6 zeigt. Die jeweiligen Abmessungen der Hinterschnittpartie, des Ringkörpers 26 und des Einbaukörpers 24 sind so gewählt, dass der Einbaukörper im Wesentlichen spielfrei an der ersten Wandpartie 10 montiert ist.

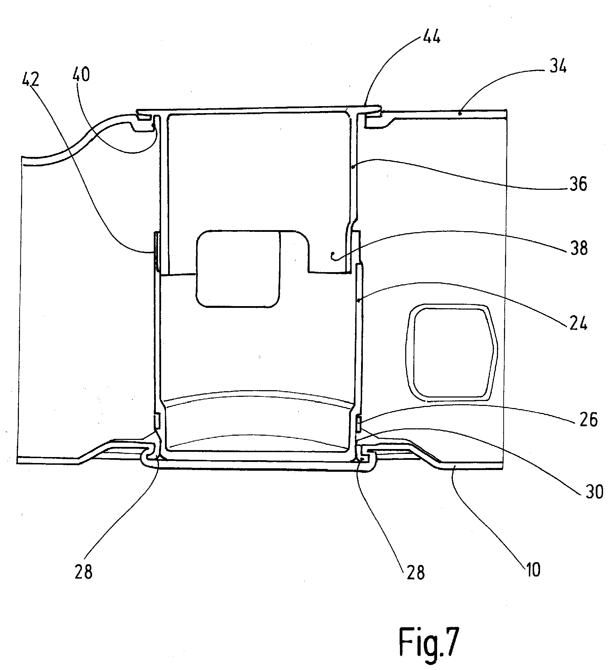

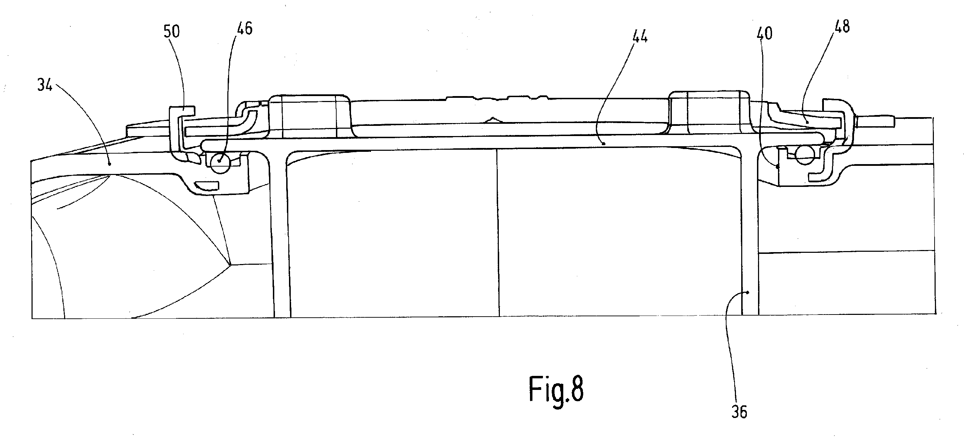

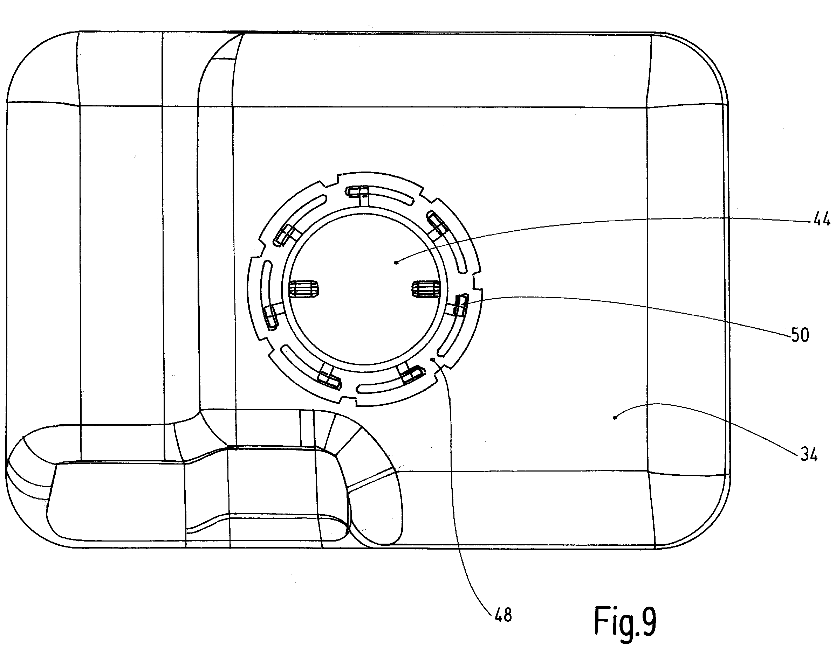

Fig. 7 zeigt eine zwischen der ersten Wandpartie 10 und einer gegenüberliegenden zweiten Wandpartie 34 angeordnete Versteifungseinrichtung, die im Wesentlichen durch den vorstehend beschriebenen Einbaukörper 24 als erstes Versteifungselement und ein zweites Versteifungselement 36 gebildet ist. Das zweite Versteifungselement 36 wird mit einer rohrartigen Koppelpartie 38 durch eine der Hinterschnittpartie der ersten Wandpartie 10 gegenüberliegende Öffnung 40 in der zweiten Wandpartie 34 in das Behälterinnere und in eine komplementäre Koppelpartie 42 des Einbaukörpers 24 eingeführt. Wenn das zweite Versteifungselement 36 derart positioniert ist, liegt gleichzeitig ein Flanschdeckel 44 des zweiten Versteifungselements 36 an einem in Fig. 8 näher dargestellten, die Öffnung 40 umschließenden Dichtring 46 an. Der Flanschdeckel 44 wird durch einen Verschlussring 48 gegen den Dichtring 46 gedrückt, wobei der Verschlussring 48 mit einem in die zweite Wandpartie 34 eingeformten Bajonettring 50, etwa einem üblichen Verschlussring nach SAE-Norm J2587, zusammenwirkt. Der Bajonettring 50 weist über die zweite Wandpartie 34 überstehende Verschlussteile auf, die in dafür vorgesehene Öffnungen in des Verschlussrings 48 eingreifen und durch Verdrehen des Verschlussrings 48 für eine Verriegelung derselben sorgen, wobei gleichzeitig der für einen fluiddichten Verschluss der Öffnung 40 erforderliche Anpressdruck auf den Flanschdeckel 44 aufgebracht wird. Fig. 8 zeigt einen Schnitt durch den Behälter im Bereich des Flanschdeckels 44 und Fig. 9 eine Draufsicht auf den durch den Flanschdeckel 44, den Verschlussring 48 und den Bajonettring 50 gebildeten Verschlussmechanismus.

Das zweite Versteifungselement 36 kann um eine mit dem Einbaukörper 24 gemeinsame Längsmittelachse verdreht werden. Dabei kommen an den Koppelpartien 38, 42 vorgesehene Kopplungsorgane in sperrenden Eingriff miteinander, so dass die zwei Versteifungselemente 24, 36 zumindest zugfest miteinander verbunden sind. Sowohl die Verbindung der Koppelpartien 38, 42 als auch die Verriegelung des Verschlussrings 48 sind lösbar gestaltet, so dass das zweite Versteifungselement jederzeit entfernt werden kann, um Zugang zum Behälterinneren zu erlangen, beispielsweise um eine defekte Kraftstoffpumpe zu ersetzen.

Zusammenfassend ist folgendes festzustellen: Die Erfindung betrifft einen Behälter, insbesondere Kunststoff-Kraftstoffbehälter, mit einer das Innere des Behälters zwischen einander gegenüberliegenden ersten und zweiten Wandpartien 10, 34 des Behälters durchsetzenden und die Wandpartien 10, 34 aneinander koppelnden Versteifungseinrichtung, wodurch der Behälter beschädigungsfrei einem erhöhten Innendruck ausgesetzt werden kann. Gemäß der Erfindung ist vorgesehen, dass die Versteifungseinrichtung ein erstes, an der ersten Wandpartie 10 angeordnetes Versteifungselement 24 und ein zweites, an der zweiten Wandpartie 34 angeordnetes Versteifungselement 36 aufweist, wobei das erste und das zweite Versteifungselement 24, 36 zusammenwirkende Koppelpartien 38, 42 aufweisen und wobei das zweite Versteifungselement 36 mit dem ersten Versteifungselement 24 zugfest verbindbar ist und im verbundenen Zustand mit einem Flanschdeckel 44 eine Öffnung 40 in der zweiten Wandpartie 34 verschließt, wobei das erste Versteifungselement 24 über einen zwischengeordneten Ringkörper 26 an einer Hinterschnittpartie der ersten Wandpartie 10 fixiert ist.

## Patentansprüche

1. Behälter, insbesondere Kunststoff-Kraftstoffbehälter, mit einer das Innere des Behälters zwischen einander gegenüberliegenden ersten und zweiten Wandpartien (10, 34) des Behälters durchsetzenden und die Wandpartien (10, 34) aneinander koppelnden Versteifungseinrichtung, wodurch der Behälter beschädigungsfrei einem erhöhten Innendruck ausgesetzt werden kann, wobei die Versteifungseinrichtung ein erstes, an der ersten Wandpartie (10) angeordnetes Versteifungselement (24) und ein zweites, an der zweiten Wandpartie (34) angeordnetes Versteifungselement (36) aufweist, wobei das erste und das zweite Versteifungselement (24, 36) zusammenwirkende Koppelpartien (38, 42) aufweisen und wobei das zweite Versteifungselement (36) mit dem ersten Versteifungselement (24) zugfest verbindbar ist und im verbundenen Zustand mit einem Flanschdeckel (44) eine Öffnung (40) in der zweiten Wandpartie (34) verschließt, **dadurch gekennzeichnet, dass** das erste Versteifungselement (24) über einen zwischengeordneten Ringkörper (26) an einer Hinterschnittpartie der ersten Wandpartie (10) fixiert ist.

2. Behälter nach Anspruch 1, **dadurch gekennzeichnet, dass** der Flanschdeckel (44) des zweiten Versteifungslements (36) auf der Behälteraußenseite angeordnet ist.

3. Behälter nach Anspruch 1 oder 2, **dadurch gekennzeichnet, dass** die Öffnung (40) in der zweiten Wandpartie (34) von einem in die Wandpartie (34) eingebetteten Einlegering (50) umschlossen ist, der eine außenseitig über die Wandpartie (34) überstehende Befestigungspartie aufweist.

4. Behälter nach Anspruch 3, **dadurch gekennzeichnet, dass** ein Verschlussring (48) vorgesehen ist, der mit der Befestigungspartie des Einlegerings (50) zusammenwirkt und den Flanschdeckel (44) des zweiten Versteifungselements (36) übergreift und gegen einen Außenrand der Öffnung (40) in der zweiten Wandpartie (34) drückt.

5. Behälter nach Anspruch 4, **dadurch gekennzeichnet, dass** zwischen dem Flanschdeckel (44) des zweiten Versteifungselements (34) und dem Außenrand der Öffnung (40) in der zweiten Wandpartie (34) ein Dichtkörper (46), insbesondere ein Dichtring aus Elastomermaterial, angeordnet ist.

6. Behälter nach einem der Ansprüche 1 bis 5, **dadurch gekennzeichnet, dass** das erste Versteifungselement (24) als topfartiger Einbaukörper, insbesondere als Tankmodul mit einem Kraftstoffreservoir und einer darin angeordneten Kraftstoffpumpe, ausgebildet ist.

7. Behälter nach Anspruch 1, **dadurch gekennzeichnet, dass** die Hinterschnittpartie in der ersten Wandpartie (10) in einer Blasform (12) durch von außen auf die erste Wandpartie (10) wirkende, in der Blasform (12) beweglich angeordnete Schieber (14, 14') hergestellt ist.

8. Behälter nach Anspruch 1, **dadurch gekennzeichnet, dass** die Hinterschnittpartie in der ersten Wandpartie (10) durch ein in eine Blasform (12) eingelegtes Formteil (16) hergestellt ist.

9. Behälter nach einem der Ansprüche 1 bis 8, **dadurch gekennzeichnet, dass** die Hinterschnittpartie im Wesentlichen kreisförmig ausgebildet ist.

10. Behälter nach einem der Ansprüche 1 bis 9, **dadurch gekennzeichnet, dass** die Hinterschnittpartie aus mindestens zwei, vorzugsweise drei separaten Abschnitten besteht.

11. Behälter nach einem der Ansprüche 1 bis 10, **dadurch gekennzeichnet, dass** der Ringkörper (26) behälterwandseitige, nach außen weisende Halterippen (28) aufweist, deren freie Enden vor dem Einrasten des Einbaukörpers (24) in den Ringkörper (26) auf einem Kreis liegen, dessen Durchmesser d kleiner ist als der Durchmesser D eines Kreises, der den freien Innendurchmesser der Hinterschnittpartie definiert.

12. Behälter nach einem der Ansprüche 1 bis 11, **dadurch gekennzeichnet, dass** der Ringkörper (26) eine zylindrische Wandpartie mit Durchbrechungen (32) aufweist, in die Rastvorsprünge (30) an einer Außenwandpartie des Einbaukörpers (24) einrastbar sind.

13. Behälter nach Anspruch 12, **dadurch gekennzeichnet, dass** die die Rastvorsprünge (30) aufweisende Außenwandpartie des Einbaukörpers (24) im Wesentlichen zylindrisch ausgebildet ist mit einem Durchmesser, der höchstens dem Durchmesser D des freien Innendurchmessers der Hinterschnittpartie abzüglich der Dicke der die Durchbrechungen (32) aufweisenden Wandpartie des Ringkörpers (26) beträgt.

14. Verfahren zum Aussteifen eines Behälters, insbesondere eines Kunststoff-Kraftstoffbehälters, um den Behälter beschädigungsfrei einem erhöhten Innendruck aussetzen zu können, wobei der Behälter einander gegenüberliegende erste und zweite Wandpartien (10, 34) aufweist, **dadurch gekennzeichnet, dass**
- ein erstes Versteifungselement (24) einer Versteifungseinrichtung über einen zwischengeordneten Ringkörper (26) an einer Hinterschnittpartie der ersten Wandpartie (10) fixiert wird,
- eine Koppelpartie (38) eines zweiten Versteifungselements (36) der Versteifungseinrichtung durch eine in der zweiten Wandpartie (34) vorgesehene und mit der Hinterschnittpartie der ersten Wandpartie (10) fluchtende Öffnung (40) hindurch mit einer komplementären Koppelpartie (42) des ersten Versteifungselements (24) in Eingriff gebracht wird, wobei ein Flanschdeckel (44) des zweiten Versteifungselements (36) die Öffnung (40) in der zweiten Wandpartie (34) verschließt.

15. Verfahren nach Anspruch 14, **dadurch gekennzeichnet, dass** ein Verschlussring (48) mit einer Befestigungspartie eines in die zweite Wandpartie (34) eingebetteten und die Öffnung (40) umschließenden Einlegerings (50) verbunden wird, wodurch der Flanschdeckel (44) des zweiten Versteifungselements (36) gegen die zweite Wandpartie (34) gedrückt wird und die Öffnung (40) zusammen mit einem zwischen der zweiten Wandpartie (34) und dem Flanschdeckel (44) angeordneten Dichtkörper (46) dichtend verschließt.

16. Verfahren nach Anspruch 14 oder 15, **dadurch gekennzeichnet, dass** die erste Wandpartie (10) behälterinnenseitig mit einer Hinterschnittpartie versehen wird.

17. Verfahren nach Anspruch 16, **dadurch gekennzeichnet, dass** die Hinterschnittpartie in einer Blasform (12) in die erste Wandpartie (10) durch Schieber (14, 14') der Blasform oder durch ein in die Blasform (12) eingelegtes Formteil (16) eingeformt wird.

## Claims

1. A container, in particular a plastic fuel container, having a stiffening device which penetrates the interior of the container between opposite first and second wall parts (10, 34) of the container and couples the wall parts 10, 34) to each other, whereby the container can be subjected to increased interior pressure without damage, wherein the stiffening device comprises a first stiffening element (24) arranged on the first wall part (10) and a second stiffening element (36) arranged on the second wall part (34), wherein the first and second stiffening elements (24, 36) have interacting coupling parts (38, 42) and wherein the second stiffening element (36) can be connected to the first stiffening element (24) with high tensile strength and, in the connected state, seals an opening (40) in the second wall part (34) by means of a flange cover (44), **characterized in that** the first stiffening element (24) is fixed via an interposed annular body (26) to an undercut part of the first wall part (10).

2. The container as claimed in claim 1, **characterized in that** the flange cover (44) of the second stiffening element (36) is arranged on the container outer face.

3. The container as claimed in claim 1 or 2, **characterized in that** the opening (40) in the second wall part (34) is enclosed by an insert ring (50) which is embedded in the wall part (34) and which has a fastening part protruding on the outside over the wall part (34).

4. The container as claimed in claim 3, **characterized in that** a closure ring (48) is provided, said closure ring interacting with the fastening part of the insert ring (50) and encompassing the flange cover (44) of the second stiffening element (36), and pressing against an outer edge of the opening (40) in the second wall part (34).

5. The container as claimed in claim 4, **characterized in that** a sealing body (46), in particular a sealing ring made of elastomer material, is arranged between the flange cover (44) of the second stiffening element (34) and the outer edge of the opening (40) in the second wall part (34).

6. The container as claimed in one of claims 1 to 5, **characterized in that** the first stiffening element (24) is configured as a pot-shaped insert, in particular as a tank module with a fuel reservoir and a fuel pump arranged therein.

7. The container as claimed in claim 1, **characterized in that** the undercut part is produced in the first wall part (10) in a blow mold (12) by sliders (14, 14') which act from outside on the first wall part (10) and which are movably arranged in the blow mold (12).

8. The container as claimed in claim 1, **characterized in that** the undercut part is produced in the first wall part (10) by a mold part (16) inserted into a blow mold (12).

9. The container as claimed in one of claims 1 to 8, **characterized in that** the undercut part is of substantially circular configuration.

10. The container as claimed in one of claims 1 to 9, **characterized in that** the undercut part consists of at least two, preferably three, separate portions.

11. The container as claimed in one of claims 1 to 10, **characterized in that** the annular body (26) comprises outwardly facing retaining ribs (28) on the container wall side, the free ends thereof being located on a circle before the engagement of the insert (24) in the annular body (26), the diameter d of said circle being smaller than the diameter D of a circle which defines the free internal diameter of the undercut part.

12. The container as claimed in one of claims 1 to 11, **characterized in that** the annular body (26) has a cylindrical wall part with through-holes (32), latching projections (30) on an outer wall part of the insert (24) being able to be engaged therein.

13. The container as claimed in claim 12, **characterized in that** the outer wall part of the insert (24) comprising the latching projections (30) is of substantially cylindrical configuration with a diameter which at most is the diameter D of the free internal diameter of the undercut part minus the thickness of the wall part of the annular body (26) comprising the through-holes (32).

14. A method for stiffening a container, in particular a plastic fuel container, in order to be able to subject the container to an increased internal pressure without damage, wherein the container comprises first and second wall parts (10, 34) opposing one another, **characterized in that**
- a first stiffening element (24) of a stiffening device is fixed via an interposed annular body (26) to an undercut part of the first wall part (10),
- a coupling part (38) of a second stiffening element (36) of the stiffening device is brought into engagement through an opening (40), which is provided in the second wall part (34) and which is aligned with the undercut part of the first wall part (10), with a complementary coupling part (42) of the first stiffening element (24), wherein a flange cover (44) of the second stiffening element (36) seals the opening (40) in the second wall part (34).

15. The method as claimed in claim 14, **characterized in that** a closure ring (48) is connected to a fastening part of an insert ring (50), which is embedded in the second wall part (34) and which encloses the opening (40), whereby the flange cover (44) of the second stiffening element (36) is pressed against the second wall part (34) and seals the opening (40) in a sealed manner together with a sealing body (46) arranged between the second wall part (34) and the flange cover (44).

16. The method as claimed in claim 14 or 15, **characterized in that** the first wall part (10) on the container inner face is provided with an undercut part.

17. The method as claimed in claim 16, **characterized in that** the undercut part is molded in a blow mold (12) into the first wall part (10) by sliders (14, 14') of the blow mold or by a mold part (16) inserted into the blow mold (12).

## Revendications

1. Réservoir, en particulier réservoir de carburant en matière plastique, muni d'un dispositif de renforcement traversant l'intérieur du réservoir entre une première et une seconde partie de paroi (10, 34) du réservoir se faisant face l'une l'autre et couplant l'une à l'autre les parties de paroi (10, 34), de sorte que le réservoir peut être exposé sans dommages à une pression interne plus élevée, le dispositif de renforcement présentant un premier élément de renforcement (24) agencé sur la première partie de paroi (10) et un second élément de renforcement (36) agencé sur la seconde partie de paroi (34), le premier et le second élément de renforcement (24, 36) comportant des parties de raccordement (38, 42) en interaction, et le second élément de renforcement (36) pouvant être assemblé au premier élément de renforcement (24) de manière à résister à la traction et, lorsqu'il est assemblé, ferme par un couvercle à bride (44) une ouverture (40) ménagée dans la seconde partie de paroi (34), **caractérisé en ce que** le premier élément de renforcement (24) est fixé à une partie en contre-dépouille de la première partie de paroi (10) par l'intermédiaire d'un corps annulaire (26) intermédiaire.

2. Réservoir selon la revendication 1, **caractérisé en ce que** le couvercle de bride (44) du second élément de renforcement (36) est agencé du côté extérieur du réservoir.

3. Réservoir selon la revendication 1 ou 2, **caractérisé en ce que** l'ouverture (40) dans la seconde partie de paroi (34) est entourée d'un anneau d'insertion (50) intégré dans la partie de paroi (34), lequel anneau comporte une partie de fixation faisant saillie vers l'extérieur au-dessus de la partie de paroi (34).

4. Réservoir selon la revendication 3, **caractérisé en ce qu'**un anneau de fermeture (48) est prévu, lequel anneau de fermeture est en interaction avec la partie de fixation de l'anneau d'insertion (50) et chevauche le couvercle de bride (44) du second élément de renforcement (36) et fait pression sur un bord extérieur de l'ouverture (40) dans la seconde partie de paroi (34).

5. Réservoir selon la revendication 4, **caractérisé en ce qu'**un corps d'étanchéité (46), en particulier un anneau d'étanchéité en matériau élastomère, est agencé entre le couvercle de bride (44) du second élément de renforcement (34) et le bord extérieur de l'ouverture (40) dans la seconde partie de paroi (34).

6. Réservoir selon l'une des revendications 1 à 5, **caractérisé en ce que** le premier élément de renforcement (24) est réalisé sous la forme d'un corps à encastrer en forme de pot, en particulier sous la forme d'un module réservoir comportant un réservoir de carburant et une pompe à carburant agencée dans celui-ci.

7. Réservoir selon la revendication 1, **caractérisé en ce que** la partie en contre-dépouille est réalisée dans la première partie de paroi (10) dans un moule de soufflage (12) par des coulisseaux (14, 14') agissant sur la première partie de paroi (10) à partir de l'extérieur et agencés de façon mobile dans le moule de soufflage (12).

8. Réservoir selon la revendication 1, **caractérisé en ce que** la partie en contre-dépouille est réalisée dans la première partie de paroi (10) par une pièce moulée (16) insérée dans un moule de soufflage (12).

9. Réservoir selon l'une des revendications 1 à 8, **caractérisé en ce que** la partie en contre-dépouille est sensiblement circulaire.

10. Réservoir selon l'une des revendications 1 à 9, **caractérisé en ce que** la partie en contre-dépouille est constituée d'au moins deux, de préférence trois sections séparées.

11. Réservoir selon l'une des revendications 1 à 10, **caractérisé en ce que** le corps annulaire (26) présente des nervures de retenue (28) se trouvant du côté de la paroi de réservoir et orientées vers l'extérieur, et dont les extrémités libres, avant l'encliquetage du corps à encastrer (24) dans le corps annulaire (26), reposent sur un cercle dont le diamètre d est inférieur au diamètre D d'un cercle qui définit le diamètre intérieur libre de la partie en contre-dépouille.

12. Réservoir selon l'une des revendications 1 à 11, **caractérisé en ce que** le corps annulaire (26) comporte une partie de paroi cylindrique présentant des découpures (32), dans lesquelles les saillies d'encliquetage (30) peuvent s'encliqueter sur une partie de paroi extérieure du corps à encastrer (24).

13. Réservoir selon la revendication 12, **caractérisé en ce que** la partie de paroi extérieure du corps à encastrer (24) comportant les saillies d'encliquetage (30) présente une forme sensiblement cylindrique ayant un diamètre qui est au plus le diamètre D du diamètre intérieur libre de la partie en contre-dépouille moins l'épaisseur de la partie de paroi du corps annulaire (26) comportant les découpures (32).

14. Procédé de renforcement d'un réservoir, en particulier d'un réservoir de carburant en matière plastique, afin de pouvoir exposer le réservoir sans dommages à une pression interne plus élevée, le réservoir comportant des première et seconde parties de paroi (10, 34) se faisant face l'une l'autre, **caractérisé en ce**
- **qu'**un premier élément de renforcement (24) d'un dispositif de renforcement est fixé à une partie de contre-dépouille de la première partie de paroi (10) par l'intermédiaire d'un corps annulaire (26) intermédiaire,
- **qu'**une partie de couplage (38) d'un second élément de renforcement (36) du dispositif de renforcement est mise en prise avec une partie de couplage (42) complémentaire du premier élément de renforcement (24) par une ouverture (40) prévue dans la seconde partie de paroi (34) et alignée avec la partie de contre-dépouille de la première partie de paroi (10), un couvercle de bride (44) du second élément de renforcement (36) fermant l'ouverture (40) dans la seconde partie de paroi (34).

15. Procédé selon la revendication 14, **caractérisé en ce qu'**un anneau de fermeture (48) est assemblé à une partie de fixation d'un anneau d'insertion (50) intégré dans la seconde partie de paroi (34) et entourant l'ouverture (40), de sorte que le couvercle de bride (44) du second élément de renforcement (36) est pressé contre la seconde partie de paroi (34) et ferme de manière étanche l'ouverture (40) conjointement avec un corps d'étanchéité (46) agencé entre la seconde partie de paroi (34) et le couvercle de bride (44).

16. Procédé selon la revendication 14 ou 15, **caractérisé en ce que** la première partie de paroi (10) est munie d'une partie en contre-dépouille à l'intérieur du réservoir.

17. Procédé selon la revendication 16, **caractérisé en ce que** la partie en contre-dépouille est formée dans un moule de soufflage (12) dans la première partie de paroi (10) par des coulisseaux (14, 14') du moule de soufflage ou par une pièce moulée (16) insérée dans le moule de soufflage (12).
